# EUROPEAN PATENT APPLICATION

(11) **EP 3 159 840 A1**
(43) Date of publication of application: **26.04.2017**
(21) Application number: 16195320.3
(22) Date of filing: 24.10.2016
(51) Int. Cl.: G06Q 10/10, G06Q 30/02

(54) **MEANS FOR TRIGGERING AN ACTION ON A MOBILE DEVICE OF A USER**

(30) Priority: 22.10.2015 EP 15191025
(71) Applicant: SNIPS, 75002 Paris (FR)
(72) Inventor: KERKHOVE, Colas, 75002 PARIS (FR); DUREAU, Joseph, 92110 CLICHY (FR)
(74) Representative: Verriest, Philippe

(57) **Abstract**

The invention concerns means for triggering an action in
**•** determining a current sub-region, amongst the sub-regions of a geographical classification, using the current geographical position;
**•** determining a current sub-period, amongst the sub-periods of a time classification, using the current time ;
**•** determining at least one sub-region of destination amongst sub-regions of the geographical classification according to probabilities of departure of the user, from the current sub-region, to each sub-region of the geographical classification, for each sub-period of the time classification, and according to the current sub-period ;
**•** obtaining a list of activities related to the user ;
**•** determining at least one predicted activity according to probabilities, for each activity of the list of activities, that the user will engaged in said activity, in the at least one sub-region of destination, for each sub-period of the time classification, and according to the current sub-period ;
**•** triggering at least one action according to the at least one predicted activity

## Description

The present invention generally relates to means for triggering an action on a mobile device of a user. More particularly, the invention relates to means for predicting activities of a user of a mobile device, in real time, based notably on current and past geolocalization data, and triggering actions according to said predicted activities.

Mobile devices such as mobile phones, tablet or wearable objects are provided with means for determining and storing data related to the activities of the user. For instance, geolocalization data can be stored in logs, upon approval of the user. Other data can be collected and stored, for example health and body information such as heart rate, service-specific information such as successful connection to a service, etc.

Methods using said geolocalization data are known from the art to make predictions of future moves of the user. However said methods are generally not reliable and/or highly complex and demanding in terms of computational requirements. Consequently, they are generally not adapted to be implemented in real time by a common mobile device, in particular in the context of using the results to trigger actions when required. Moreover, they generally don't take into consideration relevant available data that could help improving results of the predictions. Such methods for predicting future moves of the user are for example described in the patent document US 2014/0128105 or US 2015/0073693.

It is therefore still desirable to provide means for predicting activities of a user of a mobile device, in real time, based notably on current and past geolocalization data, and triggering actions according to said predicted activities.

To that end, according to a first aspect, the present invention concerns a method for triggering an action, according to a current time and a current geographical location of a mobile device of a user. The method comprises the following steps :
- obtaining a geographical classification defining geographical regions; each geographical region being further subdivided into sub-regions ;
- determining a current sub-region, amongst the sub-regions of the geographical classification, using the current geographical position;
- obtaining a time classification defining time periods; each time period being further subdivided into sub-periods;
- determining a current sub-period, amongst the sub-periods of the time classification, using the current time ;
- determining at least one sub-region of destination amongst sub-regions of the geographical classification according to probabilities of departure of the user, from the current sub-region, to each sub-region of the geographical classification, for each sub-period of the time classification, and according to the current sub-period ;
- obtaining a list of activities related to the user;
- determining at least one predicted activity according to probabilities, for each activity of the list of activities, that the user will engaged in said activity, in the at least one sub-region of destination, for each sub-period of the time classification, and according to the current sub-period ;
- triggering at least one action according to the at least one predicted activity.

The sub-periods can be defined according to information about activities related to the user over a past time interval. The sub-periods can be defined according to information about locations and moves related to the user over a past time interval.

The sub-period of the time classification may relate to periods of the day. The time periods of the time classification may then relate to days.

The time periods of the time classification may relates to weeks, each weeks being subdivided into days, the sub-period of the time classification relating to periods of the day. For example, a time period of the time classification may be between 10am and 12am every workweek day. A time period of the time classification may also be for example between 11pm and 4am every monday.

A time period of the time classification may extend over more than one day, for example between 22am on Friday and 10pm on Saturday.

The at least one action may comprise providing, on the mobile device, geographical and/or navigation services according to the at least one sub-region of destination.

The at least one action may comprise providing, on the mobile device, organisational and management services related to the at least one predicted activity. For example, the organisational and management services related to the at least one predicted activity may be providing following recommendations: "go home, tonight, through this calculated path, displayed on the screen of the terminal, so that you can take your delivery without losing time".

The at least one action may comprise providing information to the user, on the mobile device, related to the at least one predicted activity and/or to the at least one sub-region of destination. For example, the at least one action may relate to providing information related to "user-favorite restaurants still opened" or "one metro station, in this region, that you may need to go back home, is closed".

The at least one action may comprise providing information to the user, on the mobile device, related to similar sub-regions to the at least one sub-region of destination. For example, the at least one action may relate to providing information that could be described as follow: "you plan to visit this region A on Friday night; you often go to Chinese restaurants in regions that you visit on Friday night; but there is no Chinese restaurant in this region A".

The similar sub-regions may be identified taking into consideration the at least one predicted activity.

The at least one action may comprise the sending of a request for action(s) to a system or a device configured to perform an action related to the at least one sub-region of destination.

The at least one action may comprise the sending to a third-party navigation system of the at least one sub-region of destination.

According to one aspect of the invention, the third party navigation system is a car navigation system. the sub region of destination may therefore be used to configure the car navigation system.

The at least one action may comprise displaying on a user interface of the mobile device, supplementary information related to the at least one predicted activity and/or the at least one sub-region of destination. For example, supplementary information may comprise explanations about the reason why the at least one action has been triggered. An example of the supplementary information may be: "you received a text message with the name of this place in it, Do you want to see destinations to it ?".

According to an embodiment, according to the at least one predicted activity and/or the at least one sub-region of destination, it is determined if the predicted journey to the at least one sub-region of destination may be considered as usual or unusual. In the present description, the term "usual" refers to a journey the user has already done repeatedly over a period of time, typically at least three times in the last month.The term usual may be interpreted according to a context : for exemple, the same journey may be considered as usual when done, as every day at 8:00, but unusual when done at 15:00 In the present description, by contrast, the term "unusual" refers to a journey the user has not already done over a period of time, or occasionally, typically one or twice at most in last month. If the predicted journey to the at least one sub-region of destination is considered as usual, the at least one action may comprise:
determing and optionally displaying an estimated time to reach the at least one sub-region of destination, according to information collected during previous similar journeys, for example a mean of the actual duration of previous journeys from the current position of the user to the at least one sub-region of destination for doing the at least one predicted activity, and/or at a sensibly same time period of the day/week; and/or,
determing and optionally displaying an estimated variation of the duration to reach the at least one sub-region of destination, compared to previous journeys of the user; that estimated variation makes in particular sense in case of usual trips.; for example, if a discrepancy is observed between the mean duration of the observed previous similar journeys and the estimation of the duration established according to collected information, a notification can be triggered in the user-interface of the mobile device to inform the user of said variation, and/or an alternative time of departure and/or routes can be proposed, and/or actions related to said discrepancy may be triggered.
determining or collecting information related to the at least one sub-region of destination, and optionally displaying said information on the user interface of the mobile terminal;
determining or collecting information related to transport means that the user is supposed to use to go to the at least one sub-region of destination may be determined and/or collected, and optionally displaying said information on the user interface of the mobile terminal.

If the predicted journey to the at least one sub-region of destination is considered as unusual, the at least one action may comprise:
looking for a local service related to the at least one sub-region of destination, and/or the at least one predicted activity.
proposing to send and/or sending information to contacts of the user; for example, a message to invite contact persons to meet at the at least one sub-region of destination may be proposed, and take the following form: "Do you wanna tell your friend that tonight you'll be at Jo's place from 8pm ?"
proposing additional information related to the at least one sub-region of destination; for example, since the user isn't used to go the at least one sub-region of destination, directions to said sub-region can be given, and details about what to do there. In an embodiment, contacts of the user present or living in the at least one sub-region of destination may be displayed and actions related to said contacts can be triggered.

According to a second aspect, the present invention also concerns a computer program that can be downloaded from a communication network and/or stored on a medium. This computer program comprises instructions for causing implementation of the method according to the second aspect, when said program is run by the processor.

According to a third aspect, the present invention also concerns information storage means, storing a computer program comprising a set of instructions causing implementation of the method according to the first aspect, when the stored information is read from said information storage means and run by a processor.

According to a fourth aspect, the present invention also concerns a mobile device adapted to execute the steps of the method according to the first aspect. More particularly, the mobile device is configured to trigger an action, according to a current time and a current geographical location, said mobile device being adapted to be manipulated by a user. The mobile device comprises a geographical classifier configured to:
- obtain a geographical classification defining geographical regions; each geographical region being further subdivided into sub-regions ;
- determine a current sub-region, amongst the sub-regions of the geographical classification, using the current geographical position.
- The mobile device comprises a time classifier configured to:
- obtain a time classification defining time periods; each time period being further subdivided into sub-periods;
- determine a current sub-period, amongst the sub-periods of the time classification, using the current time ;

The mobile device comprises a geographical prediction controller, coupled to the geographical classifier and the time classifier, and configured to:
- determine at least one sub-region of destination amongst sub-regions of the geographical classification according to probabilities of departure of the user, from the current sub-region, to each sub-region of the geographical classification, for each sub-period of the time classification, and according to the current sub-period.

The mobile device comprises an activity prediction controller, coupled to the geographical prediction controller and the time classifier, and configured to:
- obtain a list of activities related to the user;
- determine at least one predicted activity according to probabilities, for each activity of the list of activities, that the user will engage in said activity, in the at least one sub-region of destination, for each sub-period of the time classification, and according to the current sub-period ;

The mobile device comprises an action trigger, coupled to the activity prediction controller, configured to trigger at least one action according to the at least one predicted activity.

The characteristics of the invention will emerge more clearly from the following description of an example of an embodiment of the invention, said description being made with reference to the accompanying drawings, among which:
Fig. 1 schematically represents architecture of a mobile device adapted to implement the method according to the present invention;
Fig. 2 schematically represents a method for triggering an action on the mobile device;
Fig. 3 schematically represents, in an embodiment, the detailed steps of the learning step of the method for triggering an action based on activities of a user of the mobile device;
Fig. 4 schematically represents, in an embodiment, the detailed steps of the prediction step of the method for triggering an action based on activities of a user of the mobile device;
Fig. 5 illustrates a hierarchical classification to group different locations;
Fig. 6 and Fig. 7 illustrate a hierarchical classification to group different times;
Fig. 8, schematically represents, in an embodiment, the detailed steps of the prediction step S300 according to an embodiment are now discussed;
Fig. 9 schematically represents a mobile device according to an embodiment of the invention.

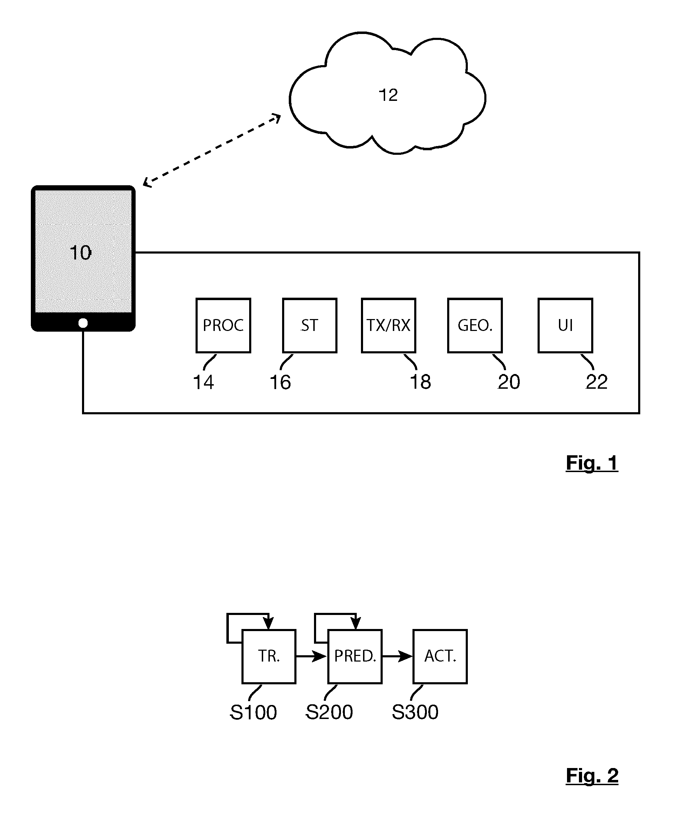

Fig. 1 schematically represents a mobile device 10 in which a module according to the present invention may be implemented. The mobile device 10 is typically a telecommunication mobile device adapted to access wirelessly to a communication network 12. The mobile device 10 further comprises a processing module 14, for example a module provided with at least one Central Processing Unit and a Random-Access Memory. The mobile device 10 further comprises storage means 16, for example a Hard-Drive and/or a solid-state memory, for storing data and allowing the processing module 14 to read and/or write said data. The mobile device 10 includes at least one communication interface 18 adapted to allow wireless access to the communication network 12. In one embodiment, the communication network 20 is coupled to Internet. The mobile device 10 further comprises a geolocalization module 20 coupled to the processing module and configured to allow the determination of the current geographical position of the mobile device 10 when turned on and/or activated. The geolocalization module 20 may comprise means for determining the current geographical position using GPS, Galileo, beacons and/or WIFI means. The mobile device 10 further comprises a user-interface 22, provided for example with a touch-sensitive screen, sensors and an audio playback and recording interface. The processing module 14 is capable of executing instructions. The instructions form one computer program that causes the processing module 14 to perform some or all of the steps of the method described hereafter with regard to Figs. 2, 3 and 4.

Any and all steps of the method described hereafter with regard to Figs. 2, 3 and 4, may be implemented in software by execution of a set of instructions or program by a programmable computing machine, such as a PC (*Personal Computer),* a DSP (*Digital Signal Processor)* or a microcontroller; or else implemented in hardware by a machine or a dedicated component, such as an FPGA *(Field-Programmable Gate Array)* or an ASIC *(Application-Specific Integrated Circuit).*

Fig. 2 schematically represents a method for triggering an action on the mobile device 10.

The method comprises a learning step S100, a prediction step S200 and an action step S300. The learning step S100 may be performed continuously, according to a schedule, upon detection of specific events and/or at specific periods, for example during a configuration or update step. The prediction step S200 may be performed continuously, according to a schedule, upon detection of specific events and/or at specific periods, for example when the user launches a specific application or performs an action, and/or for example when the user starts to move, in case it may be useful to provide the user with different ways or solutions to go to his next predicted destination.

During the learning step S100, a set D of data related to a user are collected, for example by collecting information gathered by the mobile device 10 coming from a plurality of sources such as its geolocalization module 20, the sensors of the user interface 22, or any other user-related interactions with the mobile device 10. Based on the analysis of the set D of data, a matrix M of possible activities of the user is determined and/or updates.

During the prediction step S200, a set D' of data related to a user are collected, for example by collecting information gathered by the mobile device 10 coming from a plurality of sources such as its geolocalization module 20, the sensors of the user interface 22, or any other user-related interactions with the mobile device 10. Based on the analysis of the set D' of data and on the matrix M of possible activities of the user, a place P_{dest} where the user is likely to go in the following time period and/or a list L_{act} of one or more activities related to the user are determined. The matrix M is different from the three-dimensional matrices M_{dep} that will be described hereafter for describing transitions between sub-regions for different sub-periods.

Based on the list L_{act}, and/or the place P_{dest}, during the action step S300, one or more actions are triggered and executed by the mobile device 10 and optionally by other devices coupled to the mobile device 10 and accessible through the communication network 12, such as a remote server or a local connected object.

Advantageously, the learning step S100, the prediction step S200, and the action step S300 can be executed locally on the mobile device 10. Consequently, the method according to the invention does not require any user data management on a distant server. More particularly, the creation and the management of a user account - user profile, identification, credentials, etc - on a distant server. Moreover, since the steps of the method are executed locally on the device that also collects and stores user-related information used by said method - such as geographical data related to the user, a security authorization granted by the user on its personal mobile device is typically sufficient to collect the required data method, without compromising privacy and security. Hence, personal data are not transmitted remotely by the method. Moreover, the steps of the method can be executed, even when no network connection is available. Since the method can be executed on a short scale of time without requiring access to the network, the method can be used under a broad range of situations, for example when the user go on holiday in a new place and no network is available through his mobile device. However, actions triggered during the step S300 may require a network connection, depending on the action or capabilities of the mobile device.

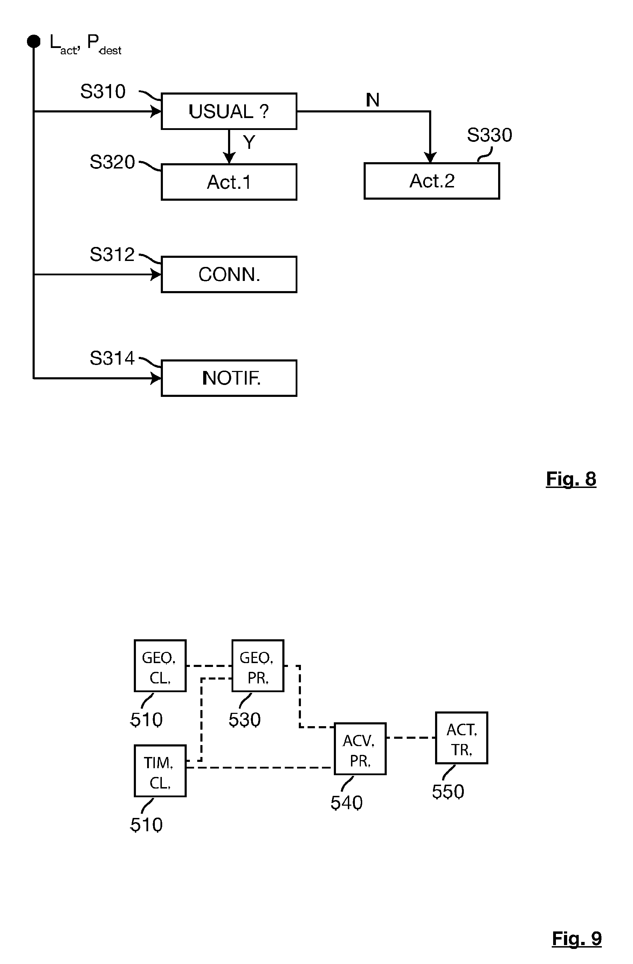

Fig.9 schematically represents a mobile device according to an embodiment of the invention, configured to trigger an action, according to a current time and a current geographical location, said mobile device being adapted to be manipulated by a user. The mobile device comprises a geographical classifier 510 configured to:
- obtain a geographical classification defining geographical regions; each geographical region being further subdivided into sub-regions ;
- determine a current sub-region, amongst the sub-regions of the geographical classification, using the current geographical position.

The mobile device comprises a time classifier 520 configured to:
- obtain a time classification defining time periods; each time period being further subdivided into sub-periods;
- determine a current sub-period, amongst the sub-periods of the time classification, using the current time ;

The mobile device comprises a geographical prediction controller 530, coupled to the geographical classifier and the time classifier, and configured to:
- determine at least one sub-region of destination amongst sub-regions of the geographical classification according to probabilities of departure of the user, from the current sub-region, to each sub-region of the geographical classification, for each sub-period of the time classification, and according to the current sub-period.

The mobile device comprises an activity prediction controller 540, coupled to the geographical prediction controller and the time classifier, and configured to:
- obtain a list of activities related to the user;
- determine at least one predicted activity according to probabilities, for each activity of the list of activities, that the user will engage in said activity, in the at least one sub-region of destination, for each sub-period of the time classification, and according to the current sub-period ;

The mobile device comprises an action trigger 550, coupled to the activity prediction controller, configured to trigger at least one action according to the at least one predicted activity.

Hereafter, in this description, the term activities relates to a list of activities performed and/or related to a user of the mobile device 10. According to the invention, each activity may be classified according to a type of action. For example, a type of action can be one of the following non-exhaustive list: "working", "socializing", "eating". According to the invention, each activity may also be classified according to a location and/or a time.

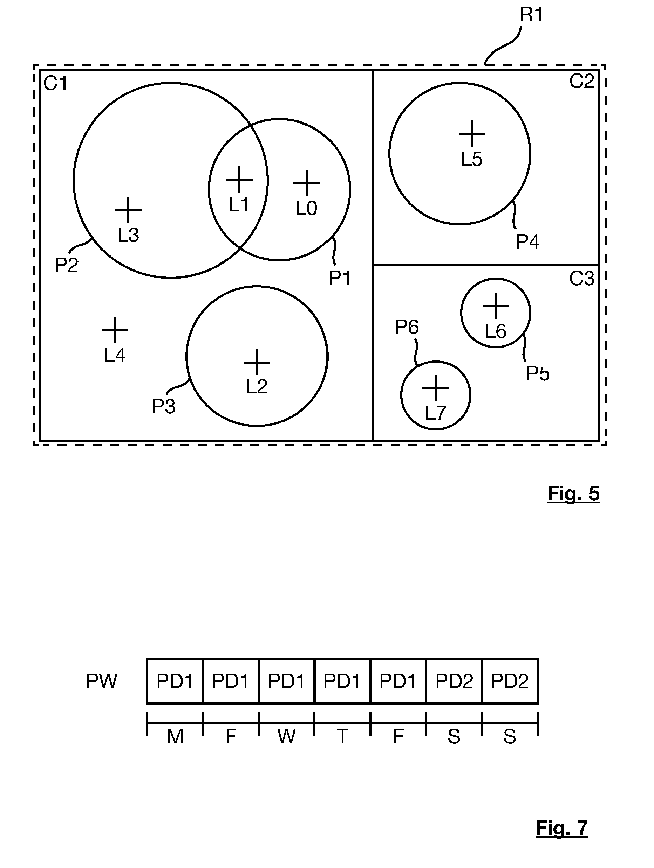

Fig. 5 illustrate the use of a hierarchical classification Hl to group different locations. In the example of the Fig. 5, a region R1 is represented and is formed by the union of clusters C1, C2 and C3. The cluster C1 comprises places P1, P2 and P3. The cluster C2 comprises place P4. The cluster C3 comprises places P5 and P6. Consequently, locations L0, L1, L2, L3, L4, L5, L6 and L7 can be grouped as described hereafter:
- location L0 is included within place P1, in cluster C1 of region R1;
- location L1 is included within places P1 and P2, in cluster C1 of region R1;
- location L2 is included within place P3, in cluster C1 of region R1;
- location L3 is included within place P2, in cluster C1 of region R1;
- location L4 is included in cluster C1 of region R1;
- location L5 is included within place P4, in cluster C2 of region R1;
- location L6 is included within place P5, in cluster C3 of region R1;
- location L7 is included within place P6, in cluster C3 of region R1.
A place is for example a point of interest, such as a restaurant, a shop, a public transport station, a garden, etc. A cluster can be described as a delimited geographical area that may comprise places. A region is the union of a group clusters. In particular, a region can represent neighbourhood specific to the user and its current location. More detailed or different hierarchical classifications to group different locations could be used, for example hierarchical classification that comprises more levels of classification or with other logic to subdivide a geographical area into sub-areas.

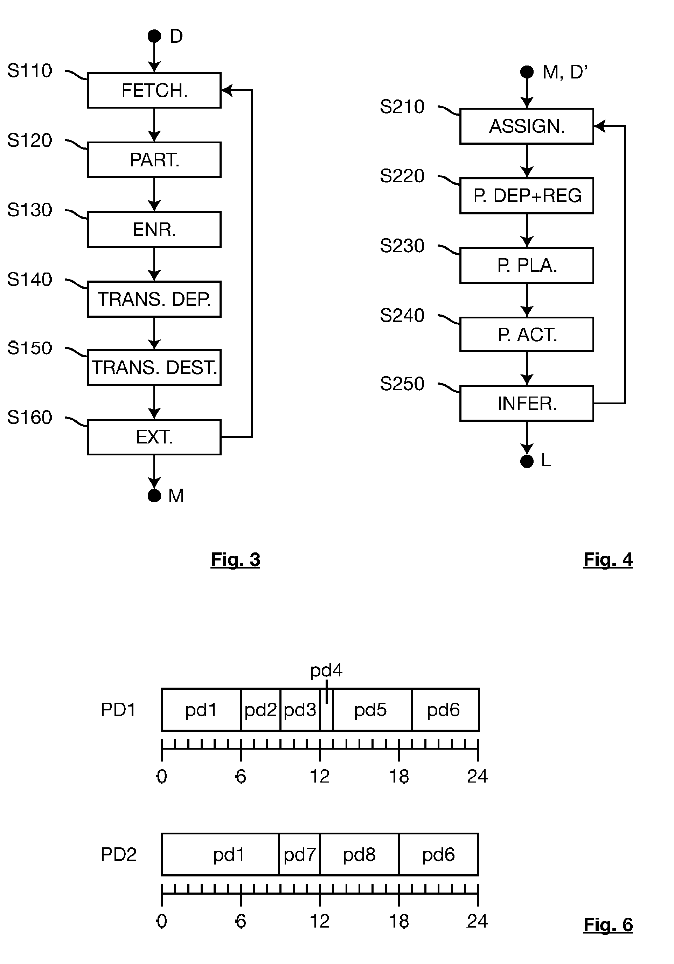

Referring to Fig. 3, the detailed steps of the learning step S100 are now discussed.

In a step S110, a list Lr of runs of the user over a predefined period is obtained, computed and/or updated. A run can be defined as a trip of a user from a position to another position or as a stop of a user in a given position. A time of departure and a time of arrival of the user are also associated to a run. Consequently, a start time period and an end time period - i.e. periods corresponding to the beginning of the run and the end of the run, no matter if it is a move or a stop - can be derived or obtained for each run. Other information can be derived or obtain for each run, for example the transport mode. The list Lr can be obtained or computed, entirely or partially, by accessing to the set D of data, stored in the storage means 16 of the mobile device 10, and/or by collecting data from the geolocalization module 20 and/or from the sensors of the user interface 22. The list Lr can be obtained or computed, entirely or partially, by accessing to the set D of data from distant services or server, for example a geolocalization server tracing the localization of the mobile device 10 or an internet application providing localization and other services to the user. The list Lr of runs of the user is typically obtained for a predefined period in the past, but may also be limited to a specific period, for example for the last 3 months.

In a step S120, a hierarchical classification Ht for sorting by groups time periods is obtained, computed and/or updated, using information extracted from the set D of data. Having extracted relevant information from the set D of data such as time-stamped geographical positions of the user on a past period of times, typical periods for each day of a typical week for the user is determined using a clustering method. For example, a *k*-means clustering method can be used. Such a *k*-means clustering method is for example described in the document Lloyd, Stuart P. (1982), "Least squares quantization in PCM", IEEE Transactions on Information Theory 28 (2): 129-137. More particularly, a *k*-means clustering method can be used with information related to times of transitions between two activities of the user, such as departure times for each run of the list Lr.

In an embodiment, the periods for each day of the hierarchical classification Ht are represented according to a Gaussian distribution. For instance, a Gaussian distribution centred on 1:00 PM with 30 minutes of standard deviation can be used to represent a period of the day between 12:30PM and 13:30PM.

Fig. 6 and 7 illustrate an exemplary hierarchical classification Ht to group different times. In the example of the Fig. 6, two sets PD1, PD2 of periods of the day are represented. The set PD1 of periods of the day is split in 6 different periods pd1, pd2, pd3, pd4, pd5, pd6 of different durations. For example, said periods of the set PD1 could be described as follow:
- the period pd1 from midnight to 6:00PM;
- the period pd2 between 6:00PM to 9:00PM;
- the period pd3 between 9:00PM to 12:00PM;
- the period pd4 between 12:00PM to 13:00AM;
- the period pd5 between 13:00AM to 19:00PM;
- the period pd6 between 19:00AM to 23:59PM.
The set PD2 of periods of the day is split in 4 different periods pd1, pd7, pd8, pd6 of different durations. For example, said periods of the set PD2 could be described as follow:
- the period pd1 from midnight to 9:00PM;
- the period pd7 between 9:00PM to 12:00PM;
- the period pd8 between 12:00PM to 18:00AM;
- the period pd6 between 18:00AM to 23:59PM.
It should also be underlined that a period may extend over more than one day, for example between 22am on Friday and 10pm on Saturday. Consequently the period do not need to stop at midnight, and may extend between 11pm to 1am.
The duration of each period may also depend on the period of the week: for example, the set of periods of the day and the granularity or duration of each period may be different, whether for example that period relates to a day of the work week or a day of the week-end.
In the example of the Fig. 7, a set PW of periods of the week are represented. The set PW of periods of the week is split in 7 different periods, each period corresponding to a day of the week and being associated to one of the set PD1 or PD2 of periods of the day. For example, Monday, Tuesday, Wednesday, Thursday, and Friday are associated to the set PD1 of periods of the day. Saturday and Sunday are associated to the set PD2 of periods of the day. Consequently, a given time can be as described hereafter:
- according to the set PW, Monday at 7:00PM correspond to the period pd2 (a breakfast and commuting time period);
- according to the set PW, Sunday at 7:00PM correspond to the period pd1 (a sleeping period);
- according to the set PW, Monday at 18:00PM correspond to the period pd5 (a working period).
More detailed or different hierarchical classifications to group different times could be used, for example hierarchical classification that comprises different periods of the week during a year, more levels of classification or with other logic to subdivide time periods into sub-periods.

In a step S130, the following information are obtained or determined and assigned to each run of the list Lr:
- a region and a cluster, according to the geographical position of the mobile device 10 and the hierarchical classification HI to group different locations;
- a place and an action, obtained or determined using an activity-detection method, such as, for example, the method described in the document "Learning to Rank for Spatiotemporal Search", Blake Shaw, Jon Shea, Siddhartha Sinha, Andrew Hogue Foursquare 568 Broadway New York, NY {blake, jonshea, ssinha, ahogue}@foursquare.com, available notably on the following address : http://www.metablake.com/foursquare/wsdm2013-final.pdf;
- a start time period, an end time period and a period of the week, based on the time period related to said run and the hierarchical classification Ht to group different times.

In a step S140, using available geographical and time information related to the list Lr of runs, for each period pdₗ of the day of the hierarchical classification Ht and for each region Rᵢ of the hierarchical classification Hl, a probability p_{dep} of departure from said region Rᵢ at a given time period pdₗ of a day, knowing that the user is in the given region Rᵢ and has already been there at time period pdₖ, is computed. More particularly, a three dimensional matrix M₁ (Rᵢ, pdₖ, pdₗ) can be built and/or updated with values obtained, for each available region Rᵢ and for each time period pdₖ, by computing the probability p_{dep} (pdₗ | Rᵢ, pdₖ) of leaving the region Rᵢ at time period pdₗ, knowing that the user has already been in the region Rᵢ at time period pdₖ. In an embodiment, the probability p₁ (pdₗ | Rᵢ, pdₖ) is calculated by counting, in the list Lr of runs, the number of departures from a given region Rᵢ at a given time period pdₗ of a day knowing that the user has already been there at time period pdₖ, and divide it by the number of situations where the user was in the region Rᵢ at the time period pdₖ.

In a step S150, using available geographical and time information related to the list Lr of runs, for each period pdₗ of the day of the hierarchical classification Ht and for each region Rᵢ of the hierarchical classification Hl, a probability and time distribution pₜᵣₐₙₛ of departures from said region Rᵢ to another region of the hierarchical classification Hl, is computed. More particularly, a three dimensional matrix M₂ (Rᵢ, Rⱼ, pdₗ) can be built and/or updated with values obtained, by determining the probability pₜᵣₐₙₛ (Rⱼ | Rᵢ, pdₗ) for the user to leave the region Rᵢ at the time period pdₗ for going to the region Rⱼ. In an embodiment, the probability p₂ (Rⱼ | Rᵢ, pdₗ) is determined by counting, in the list Lr of runs, the number of departures from a given region Rᵢ to the region Rⱼ at a given time period pdₗ of a day and divide it by the number of situations where the user left from the region Rᵢ at the time period pdₗ. For each triplet (Rᵢ, Rⱼ, pdₗ) in the matrix M₂, a time distribution is associated, for example a Gaussian distribution on the time departure from region Rᵢ to region Rⱼ corresponding to said triplet.

In a step S160, using available geographical and time information related to the list Lr of runs, for each period pdₗ of the day of the hierarchical classification Ht and for each region Rᵢ of the hierarchical classification Hl, a probability of departures from the region Rᵢ to another region of the hierarchical classification Hl, at said period pdₗ knowing that the user was there at another time of the day of the hierarchical classification Ht, is computed. In an embodiment, a four dimensions time-distributed transition matrix M_{dep} (Rᵢ, Rⱼ, pdₖ, pdₗ) of departures from the region Rᵢ to other regions of the hierarchical classification Hl, at said period pdₗ knowing that the user was there at another time of the day of the hierarchical classification Ht, can be built and/or updated with values obtained, using data of the matrix M₁ and M₂, by determining the probability p_{dep} (Rⱼ, pdᵢ | Rᵢ, pdₖ) for the user to go the region Rⱼ at the time period pdₗ, knowing that the user was in the region Rᵢ at the time period pdₖ. In an embodiment, the probability p_{dep} (Rⱼ, pdₗ | Rᵢ, pdₖ) is estimated by extrapolating the probability p₁ (pdₗ | Rᵢ, pdₖ) by the probability p₂ (Rⱼ | Rᵢ, pdₗ). For each quadruplet (Rᵢ, Rⱼ, pdₖ, pdₗ) in the matrix M_{dep}, the same time distribution, as the time distribution associated to the matrix M₂ is associated.

Referring to Fig. 4, the detailed steps of the prediction step S200 are now discussed.

In a step S210, using a set D' of data related to the user and/or the mobile device 10, the following information are determined: an estimated current location Lc of the mobile device according to the hierarchical classification Hl, estimated current time Tc according to the hierarchical classification Ht and, an estimated current activity Ac. For example, the current location Lc is determined by:
- obtaining the current geographical position of the mobile device 10 using the data produced by the geolocalization module 20; then,
- identifying the nearest location or cluster, from the current geographical position in the hierarchical classification Hl; and, then
- finding the region Rᵢ that contains the cluster.
The estimated current time Tc can be determined by:
- obtaining the current date and time from the mobile device 10; then,
- identifying the corresponding period of the day pdₖ in the hierarchical classification Ht; and,
- identifying the corresponding period of the week in the hierarchical classification Ht;.
The estimated current activity Ac can be determined using an activity-detection method sing a set D' of data related to the user and/or the mobile device 10.

In a step S220, for each period pdₗ of the day of the hierarchical classification Ht and for each region Rj of the hierarchical classification Hl, the probability of departures from the region Ri within x hours - x being a number, for example equal to 3 - is read in the four dimensions time-distributed transition matrix M_{dep} (Rᵢ, Rⱼ, pdₖ, pdₗ). It is thus possible to obtain probabilities of departures from the region Rᵢ to other regions in the next x hours period, at different periods of the day.

In a step S230, for each period pdₗ of the day of the hierarchical classification Ht and for each region Rj of the hierarchical classification Hl, the probability of departures from the region Ri within x hours to a specific place Pj of said region Rj is determined.

In an embodiement, the probability of departures from the region Ri within x hours to a specific place Pj of said region Rj is determined using a frequentist inference methods, as described for example in the wikipedia article https://en.wikipedia.org/wiki/Frequentist inference - retrieved on 17.09.2015. More particularly, the probability of departures from the region Ri within x hours to a specific place Pj of said region Rj may be determined by:
- for each period pdₗ of the day of the hierarchical classification Ht, counting, in the list Lr of runs, the number n1 of runs where the user was at region Rj and was in period pdₗ;
- counting, in the list Lr, the number n2 of runs where the user was at region Rj and was in period pdₗ and left at period pdₗ₊₁;
- estimating the probability of departures from the region Ri within x hours to a specific place Pj of said region Rj according to the number obtained by dividing the number n2 by the number n1.

In a step S240, for each period pdₗ of the day of the hierarchical classification Ht and for each region Rj of the hierarchical classification Hl, the probability of departures p₁ from the region Ri within x hours to a specific place Pj of said region Rj is determined. The place P_{dest} having the highest probability p₁ is then considered as the most likely destination.

In an embodiement, the probability of departures p₁ from the region Ri within x hours to a specific place Pj of said region Rj is determined using a frequentist inference methods, as described for example in the wikipedia article https://en.wikipedia.org/wiki/Frequentist inference - retrieved on 17.09.2015. More particularly, the probability of departures p₁ from the region Ri within x hours to a specific place Pj of said region Rj may be determined by:
- for each period pdₗ of the day of the hierarchical classification Ht, counting, in the list Lr of runs, the number n3 of runs where the user was at region Rj and left at period pdₗ;
- counting, in the list Lr, the number n4 of runs where the user was at region Rj and left at period pdₗ and actually went to the specific place Pj;
- estimating the probability of departures p₁ from the region Ri within x hours to a specific place Pj of said region Rj according to the number obtained by dividing the number n4 by the number n3.

In a step S250, for each activity act of a list L_{act} comprising all the activities already performed by the user in the place P_{dest}, a probability p2 that the user will engaged in said activity act in said place P_{dest} is determined. The list L_{act} can be determined and/or obtained using the set D or D' of data related to the user and/or the mobile device 10, and using an activity-detection method on said data or according to a list of activities declared by the user or another source of information.

In a step S260, the inferred activity act_{dest} of the user in the place P_{dest} is determined by identifying the activity of the list L_{act} that have the highest probability p2 and/or that corresponds to the activity with a probability greater or equal to a predefined threshold.

Using the list L_{act}, and optionally the place P_{dest}, during the action step S300, one or more actions are triggered and executed by the mobile device 10 and optionally by other devices coupled to the mobile device 10 and accessible through the communication network 12, such as a remote server or a local connected object. For example, having determined during the step S200 the place P_{dest}, the mobile device 10 can determine the best route to go to the place P_{dest} and can obtain and display through the user interface transport information, before the user performs any action in order to do it. In another example, if the list L_{act} comprises an activities corresponding to the attendance of the user to a meeting, during the action step S300, the mobile device 10 can obtained information of related to other attendees, and propose and/or display means for communicating easily with each of them, for example by displaying a lists of telephone number or user name for a direct or to watch their profile on a website.

Optionally, during the action step S300, having determined during the step S200 the place P_{dest}, the mobile device 10 can display and/or propose actions related to similar place P'_{dest}. Using information determined during the step S240, the similar place P'_{dest} can be identified as location, which the corresponding probability p₁ of departures is higher than a given threshold. Accordingly, it is possible to find similar places within the same region and start doing recommendation of places for a given activity.

Referring to Fig. 8, the detailed steps of the prediction step S300 according to an embodiment are now discussed.

In a step S310, according to the list L_{act} and the place P_{dest}, it is determined if the predicted journey to the place P_{dest} may be considered as usual or unusual. In the present description, the term "usual" refers to a journey the user has already done repeatedly over a period of time, typically at least three times in the last month. The term usual may be interpreted according to a context : for exemple, the same journey may be considered as usual when done, as every day at 8:00, but unusual when done at 15:00 In the present description, by contrast, the term "unusual" refers to a journey the user has not already done over a period of time, or occasionally, typically one or twice at most in the last month.

If the predicted journey to the place P_{dest} is considered as usual, in a step S320, at least one action related to said predicted journey to the place P_{dest} is triggered. A non-exhaustive list of possible actions that can be executed during the step S320 is described hereafter. It should be understood that, during the step S320, only one action of the following non-exhaustive list or a combination of at least two actions of the non-exhaustive following list may be executed. If a plurality of actions are executed, it should also be understood that the actions could be executed in parallel, sequentially, or in a predetermined or computed order.

During the step S320, an estimated time to reach the place P_{dest} may be determined. The estimated time to reach the place P_{dest} may be determined according to information collected during previous similar journeys, for example a mean of the actual duration of previous journeys from the current position of the user to the place P_{dest} for doing at least one activity of the list L_{act}, and/or at a sensibly same time period of the day/week. An estimated variation of the duration to reach the place P_{dest} compared to previous journeys of the user may be determined. For example, if the user is currently in his office and the place P_{dest} is his home, then the estimated time to reach his home from his office may be determined according to the mean duration of the observed previous similar journeys. In this example, an estimated time to reach his home from his office may be determined according to collected information of parameters likely to influence the time required to do this office to home journey, for example traffic information, accident, on-going work on the road, etc. If a discrepancy is observed between the mean duration of the observed previous similar journeys and the estimation of the duration established according to collected information, a notification can be triggered in the user-interface of the mobile device to inform the user of said variation, and/or sn alternative time of departure and/or routes can be proposed, and/or actions related to said discrepancy may be triggered.

During the step S320, information related to the place P_{dest} may be determined and/or collected, and displayed on the user interface of the mobile terminal. For example, meteorological information related the place P_{dest} may be collected. Accordingly, for example, the user may be notified on the mobile terminal that it will be raining when he arrives at the place P_{dest}, or that the museum will be closed. Suggestions, hints or actions could be subsequently be proposed or triggered. For instance, the mobile phone may propose another cultural space opened in the vicinity of the place P_{dest} or suggest to take the public transport instead of walking when rain has been forecasted.

During the step S320, information related to transport means that the user is supposed to use to go to the place P_{dest} may be determined and/or collected, and displayed on the user interface of the mobile terminal. For example, if the user is going to the place P_{dest} and it has been observed that for doing similar journeys he's using its car, information related to the position the car, and/or duration for the user to reach his car may be determined and displayed.

If the predicted journey to the place P_{dest} is considered as unusual, in a step S330, at least one action related to said predicted journey to the place P_{dest} is triggered. A non-exhaustive list of possible actions that can be executed during the step S330 is described hereafter. It should be understood that, during the step S330, only one action of the following non-exhaustive list or a combination of at least two actions of the non-exhaustive following list may be executed. If a plurality of actions are executed, it should also be understood that the actions could be executed in parallel, sequentially, or in a predetermined or computed order.

During the step S330, the mobile terminal may look for a local service related to the place P_{dest}, and optionally according to the list L_{act}. For example, the mobile terminal may send, to a booking service, a request to list available rooms in hotels surrounding the place P_{dest}.

During a step S312, according to the list L_{act} and the place P_{dest}, the mobile terminal send a request for action(s) to a system or a device configured to perform an action related to the place P_{dest}. For example, if according to the list L_{act} and the place P_{dest} it is possible to determine that the user will arrive in a room, the mobile terminal may try to connect to a device of said room, for instance an air conditioner system, the request for action(s) comprising an instruction to switch on the heating so as a desired temperature is reached before the arriving of the user. In another example, if according to the list L_{act} and the place P_{dest} it is possible to determine that the user will not arrive a given room, the mobile terminal may try to connect to a device of said given room, for instance an air conditioner system or a light-management system, the request for action(s) comprising an instruction to switch to an energy-saving mode on the air conditioner system or the light-management system, so as to diminish the energy consumption.

During the step S312, if a third-party navigation system is accessible to the mobile terminal, the latter may try to couple with the third-party navigation system, so as to transmit the place P_{dest} to the third-party navigation system. For instance, if the user is located in a vehicle or in its vicinity, the mobile terminal may establish a communication channel with the navigation system of said vehicle, and send the place P_{dest} to the navigation system of said vehicle.

During a step S314, supplementary information related to the list L_{act}, the place P_{dest}, and/or the at least one action triggered during the action step S300, may be displayed on the user interface of the mobile device. For example, supplementary information may comprise explanations about the reason why the action has been triggered.

## Claims

1. Method for triggering an action, according to a current time and a current geographical location of a mobile device (10) of a user, **characterized in that** it comprises the following steps :
• obtaining (S210) a geographical classification defining geographical regions; each geographical region being further subdivided into sub-regions ;
• determining (S210) a current sub-region, amongst the sub-regions of the geographical classification, using the current geographical position;
• obtaining (S210) a time classification defining time periods; each time period being further subdivided into sub-periods;
• determining (S210) a current sub-period, amongst the sub-periods of the time classification, using the current time ;
• determining (S220, S230, S240) at least one sub-region of destination amongst sub-regions of the geographical classification according to probabilities of departure of the user, from the current sub-region, to each sub-region of the geographical classification, for each sub-period of the time classification, and according to the current sub-period ;
• obtaining (S250) a list of activities related to the user;
• determining (S260) at least one predicted activity according to probabilities, for each activity of the list of activities, that the user will engage in said activity, in the at least one sub-region of destination, for the sub-period corresponding to a starting time of said activity;
• triggering (S300) at least one action according to the at least one predicted activity.

2. Method according to claim 1, wherein the sub-periods are defined (S120) according to information about activities related to the user over a past time interval.

3. Method according to any one of the claims 1 to 2, wherein the sub-periods are defined (S120) according to information about locations and moves related to the user over a past time interval.

4. Method according to any one of the claims 1 to 3, wherein the sub-period of the time classification relates to periods of the day.

5. Method according to claim 4, wherein the time periods of the time classification relates to days.

6. Method according to claim 4, wherein the time periods of the time classification relates to weeks, each weeks being subdivided into days, the sub-period of the time classification relating to periods of the day.

7. Method according to any one of the claims 1 to 6, wherein the at least one action comprises providing, on the mobile device, geographical and/or navigation services according to the at least one sub-region of destination.

8. Method according to any one of the claims 1 to 7, wherein the at least one action comprises providing, on the mobile device, organisational and management services related to the at least one predicted activity.

9. Method according to any one of the claims 1 to 8, wherein the at least one action comprises providing information to the user, on the mobile device, related to the at least one predicted activity and/or to the at least one sub-region of destination.

10. Method according to any one of the claims 1 to 9, wherein the at least one action comprises providing information to the user, on the mobile device, related to similar sub-regions to the at least one sub-region of destination.

11. Method according to claim 10, wherein the similar sub-regions are identified taking into consideration the at least one predicted activity.

12. Computer program comprising instructions for causing implementation of the method according to any one of the claims 1 to 11, when said program is run by the processor.

13. Support for storing a computer program comprising a set of instructions causing implementation of the method according to any one of the claims 1 to 11, when the stored information is read from said support and run by a processor.

14. Mobile device (10) configured to trigger an action, according to a current time and a current geographical location, said mobile device being adapted to be manipulated by a user, **characterized in that** it comprises :
a geographical classifier (510) configured to:
• obtain a geographical classification defining geographical regions; each geographical region being further subdivided into sub-regions ;
• determine a current sub-region, amongst the sub-regions of the geographical classification, using the current geographical position;
a time classifier (520) configured to:
• obtain a time classification defining time periods; each time period being further subdivided into sub-periods;
• determine a current sub-period, amongst the sub-periods of the time classification, using the current time ;
a geographical prediction controller (530), coupled to the geographical classifier and the time classifier, and configured to:
• determine at least one sub-region of destination amongst sub-regions of the geographical classification according to probabilities of departure of the user, from the current sub-region, to each sub-region of the geographical classification, for each sub-period of the time classification, and according to the current sub-period ;
an activity prediction controller (540), coupled to the geographical prediction controller and the time classifier, and configured to:
• obtain a list of activities related to the user;
• determine at least one predicted activity according to probabilities, for each activity of the list of activities, that the user will engage in said activity, in the at least one sub-region of destination, for each sub-period of the time classification, and according to the current sub-period ;
an action trigger (550), coupled to the activity prediction controller, configured to
• trigger at least one action according to the at least one predicted activity.
